# EUROPÄISCHE PATENTSCHRIFT

(11) **EP 3 526 508 B1**
(45) Veröffentlichungstag und Bekanntmachung des Hinweises auf die Patenterteilung: **22.04.2020**
(21) Anmeldenummer: 17786819.7
(22) Anmeldetag: 02.10.2017
(51) Int. Cl.: F16L 37/256, F16L 37/47, F16L 37/56, F16K 5/04

(54) **KUPPLUNGSVORRICHTUNG MIT INTEGRIERTEM ABSPERRHAHN**
COUPLING DEVICE HAVING AN INTEGRATED STOPCOCK
DISPOSITIF D'ACCOUPLEMENT À ROBINET D'ARRÊT INTÉGRÉ

(30) Priorität: 11.10.2016 AT 509172016
(43) Veröffentlichungstag der Anmeldung: 21.08.2019
(73) Patentinhaber: Hagleitner, Hans Georg, 5700 Zell am See (AT)
(72) Erfinder: Hagleitner, Hans Georg, 5700 Zell am See (AT)
(74) Vertreter: Torggler & Hofinger Patentanwälte
(86) Internationale Anmeldenummer: PCT/AT2017/060246
(87) Internationale Veröffentlichungsnummer: WO 2018/068070

(56) Entgegenhaltungen:
- EP-A1- 0 327 494
- WO-A2-2005/075868
- DE-C- 378 601
- GB-A- 998 004

## Beschreibung

Die Erfindung betrifft eine Kupplungsvorrichtung mit integriertem Absperrhahn zur Anordnung in einer Strömungsverbindung zwischen einer ersten Leitung und einer zweiten Leitung, mit einem Trägerkörper, der einen Anschluss für die zweite Leitung aufweist, mit einem Steckteil, der mit einem Anschluss für die erste Leitung versehen ist, und mit einem im Trägerkörper zwischen den Anschlüssen angeordneten zylindrischen Drehteil, der einen Aufnahmeraum für den Steckteil und eine Öffnung aufweist und mittels des lösbar in den Drehteil eingesteckten Steckteiles gemeinsam mit dem Drehteil im Trägerkörper verdrehbar ist, wobei die beiden Anschlüsse in der verdrehten Endstellung des Drehteiles durch die Öffnung strömungsverbunden sind, und wobei zwischen dem Steckteil und dem Trägerkörper eine Steck-Dreh-Verriegelung gebildet ist. Die Erfindung betrifft weiters Einrichtungen zur Zufuhr einer fließfähigen Substanz aus einer Quelle bzw. einem Vorrat zu einer Abgabestelle, die zwischen der Quelle bzw. einem Vorratsbehälter und der Abgabestelle eine trenn- und sperrbare Strömungsverbindung aufweisen.

Aus der EP 0 327 494 A ist eine steckbare Sicherheitskupplung für Druckleitungen mit einem Stecker und einer Kupplungsdose bekannt, in deren Gehäuse ein Sperrorgan dichtend gelagert ist, wobei das Sperrorgan durch Schwenken von einer sperrenden Lage in eine leitende Lage oder umgekehrt bringbar ist. Das Gehäuse der Kupplungsdose ist ein einstückiges, auf den Nippel oder die Muffe eines Schlauch- oder Rohr-Endstückes aufschraubbares Formstück und das Sperrorgan ist ein zylindrisches oder konisches Formstück, das eine Bohrung aufweist, in welche im Bereich ihres größten Durchmessers eine Druckfeder eingelagert ist.

Mittels der Druckfeder wird ein verdickter Bereich des in der Bohrung angeordneten Steckers in jeder der beiden Lagen in eine innere Ausnehmung der Kupplungsdose eingerastet.

Solche einhändig betätigbare Kupplungsvorrichtungen mit integriertem Absperrhahn zur Verbindung zumindest einer ersten Leitung mit einer zweiten Leitung können aber auch in anderen Verwendungsfällen von Vorteil sein, beispielsweise um in einer Einrichtung zur Zumischung von konzentrierten Chemikalien zu Wasser, bei der Herstellung von verdünnten Reinigungsmitteln, Desinfektionsmitteln, etc. eine Förderpumpe in einfacher Weise austauschen zu können, wobei sichergestellt sein muss, dass die konzentrierte Substanz nicht frei auslaufen kann. Dies bedeutet zumindest eine möglichst tropffreie Trennung des Abflusses vom Chemikalienbehälter zum Eingang der Förderpumpe und in bevorzugter Ausführung auch die tropffreie Trennung des Ausgangs der Förderpumpe zum Verbraucher, etwa zur Zumisch- oder Dosierstelle.

Erfindungsgemäß wird nun hierfür bei einer Kupplungsvorrichtung der eingangs genannten Art vorgeschlagen, dass der Drehteil eine der Steck-Dreh-Verriegelung zugehörige Durchbrechung aufweist, und die Steck-Dreh-Verriegelung einen Schlitz im Trägerkörper und einen vom Steckteil abstehenden Riegel aufweist, der durch die Durchbrechung im Drehteil den Schlitz des Trägerkörpers hintergreift.

Nach dem Einsetzen des Steckteils in den Drehteil können die beiden Teile gemeinsam um die Drehachse des Drehteils bis zum Endanschlag verschwenkt werden, wobei sich der Steckteil mit dem Trägerkörper in Art eines Bajonettverschlusses verbindet. Bevorzugt erst im letzten Abschnitt der Verschwenkung öffnet sich der Durchgang zwischen dem Anschluss für die Leitung am Steckteil und dem Anschluss für die zweite Leitung am Trägerkörper, da die mit dem Anschluss am Steckteil fluchtende Öffnung im Drehteil unter den Anschluss des Trägerkörpers einschwenkt. Der Schwenkwinkel liegt insbesondere bei 60°. In dieser Phase ist die Entnahme des Steckteiles nur durch Rückdrehung möglich, wobei der Anschluss am Trägerkörper wieder gesperrt wird.

In einer bevorzugten Ausführung ist vorgesehen, dass der Trägerkörper hohlzylindrisch ist und einen seitlichen Ausschnitt aufweist, dem der Anschluss für die zweite Leitung gegenüber liegt. Unter hohlzylindrisch wird dabei die Form des Hohlraumes verstanden, wobei die Außenform von einem Zylinder abweichend sein kann und sich nach der Verwendung oder Einbausituation richtet. Im Falle eines Hohlzylinders ist der seitliche Ausschnitt ein Fenster im Zylindermantel und der Anschluss für die zweite Leitung diagonal gegenüber ebenfalls im Zylindermantel angeordnet.

Bevorzugt liegt die Durchbrechung des Drehteils neben der Öffnung für die Strömungsverbindung zwischen den beiden Anschlüssen, sodass erreicht werden kann, dass der Steckteil durch den seitlichen Ausschnitt des Trägerkörpers in den Aufnahmeraum des Drehteils eingesteckt ist.

Für die einfache und einhändige Betätigung der Kupplungsvorrichtung ist weiters bevorzugt vorgesehen, dass der Steckteil an der dem Riegel gegenüber liegenden Seite einen Betätigungsgriff aufweist.

In der eingangs beschriebenen Verwendung der Kupplungsvorrichtung in Chemikalien transportierenden Leitungen, insbesondere in der Umgebung einer Förderpumpe, sieht eine bevorzugte Ausführung eine Doppelkupplung vor, sodass nicht nur der Eingang sondern auch der Ausgang der Pumpe gesperrt und getrennt werden können. Diese Doppelkupplung kann erfindungsgemäß in einfacher Weise dadurch erreicht werden, dass der hohlzylindrische Trägerkörper zwei Anschlüsse für die zweiten Leitungen und der Steckteil zwei Anschlüsse für Schläuche aufweisen, wobei die Steck-Dreh-Verriegelung mittig zwischen den Anschlüssen ausgebildet ist.

Aufgrund der Steck-Dreh-Verriegelung zwischen dem Steckteil und dem Trägerkörper lassen sich auch Drei- oder Mehrfachkupplungsvorrichtungen herstellen, die nebeneinander in Reihe angeordnete Anschlüsse aufweisen.

Erfindungsgemäße Einrichtungen sind dadurch gekennzeichnet, dass in der Strömungsverbindung zwischen der Quelle bzw. dem Vorrat und der Abgabestelle eine Kupplungsvorrichtung in einer der oben beschriebenen Ausführungen angeordnet ist, durch die zwischen dem Steckteil und dem Trägerkörper eine Steck-Dreh-Verriegelung gegeben ist.

Nachstehend wird nun die Erfindung anhand der Figuren der beiliegenden Zeichnungen näher beschrieben, ohne darauf beschränkt zu sein. Es zeigen:
- Fig. 1: eine schematische Darstellung der Anordnung einer bevorzugten Ausführung der erfindungsgemäßen Kupplungsvorrichtung,
- Fig. 2: einen Längsschnitt durch einen Teil der Kupplungsvorrichtung,
- Fig. 3: einen Längsschnitt durch die Kupplungsvorrichtung mit geöffneten Strömungsverbindungen,
- Fig. 4: einen Schnitt nach der Linie IV-IV der Fig. 3 in Schrägansicht,
- Fig. 5: einen Schnitt gemäß Fig. 4 durch die gesperrte Kupplungsvorrichtung,
- Fig. 6: eine Schrägansicht einer zweiten Ausführung der Kupplungsvorrichtung, und
- Fig. 7: eine schematische Darstellung der Anordnung der Ausführung nach Fig. 6.

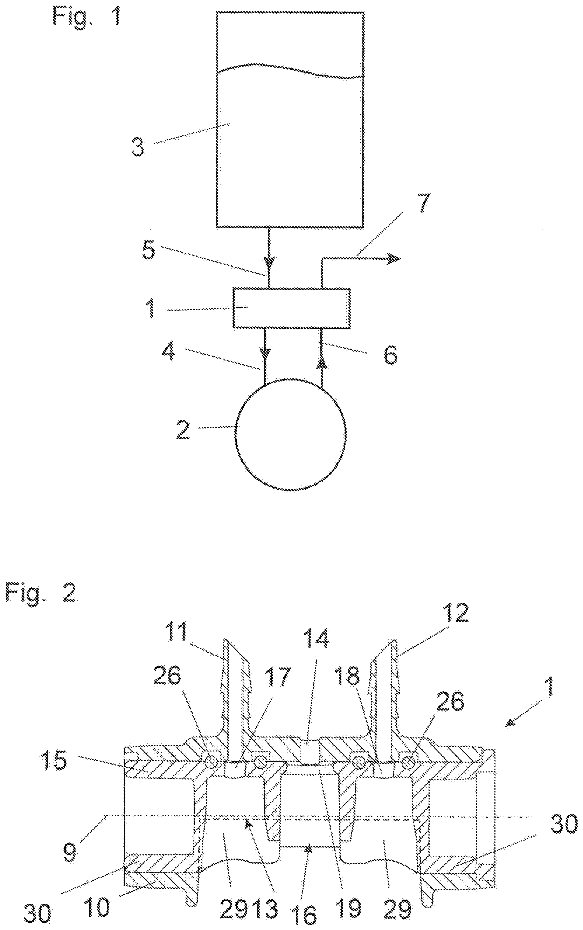

Fig. 1 zeigt schematisch eine Quelle bzw. einen Vorrat mit einem Behälter 3, aus dem eine Leitung 5 nach unten führt. Die Leitung 5 ist fest oder flexibel und ist an eine Kupplungsvorrichtung 1 angeschlossen. Von der Kupplungsvorrichtung 1 führt eine Leitung 4, insbesondere ein Schlauch, zum Eingang einer Pumpe 2 und von deren Ausgang führt eine Leitung 6, insbesondere ein weiterer Schlauch, zurück zur Kupplungsvorrichtung 1. Von dieser geht eine Leitung 7, die fest oder ebenfalls flexibel sein kann, zur Abgabestelle, beispielsweise einer Dosier- oder Mischeinrichtung für verdünntes Reinigungsmittel, Desinfektionsmittel oder dergleichen. Nach längerer Verwendung kann es notwendig werden, die Pumpe 2 zu tauschen oder zu warten und sie muss daher aus dem Ablauf ausgebaut werden. Insbesondere bei wertvollem, giftigem oder ätzendem Inhalt im Behälter 3 soll die Substanz nicht austreten oder frei auslaufen können, wenn die Pumpe 2 entfernt wird.

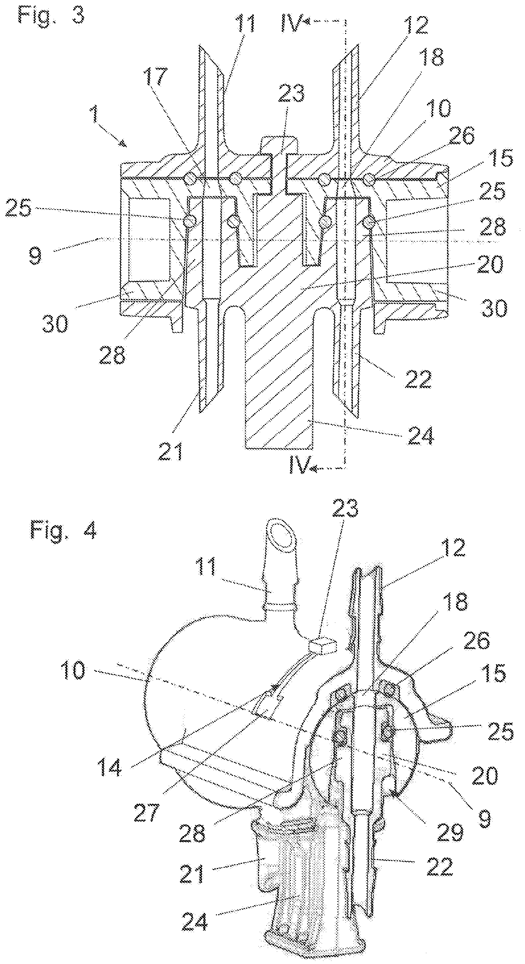

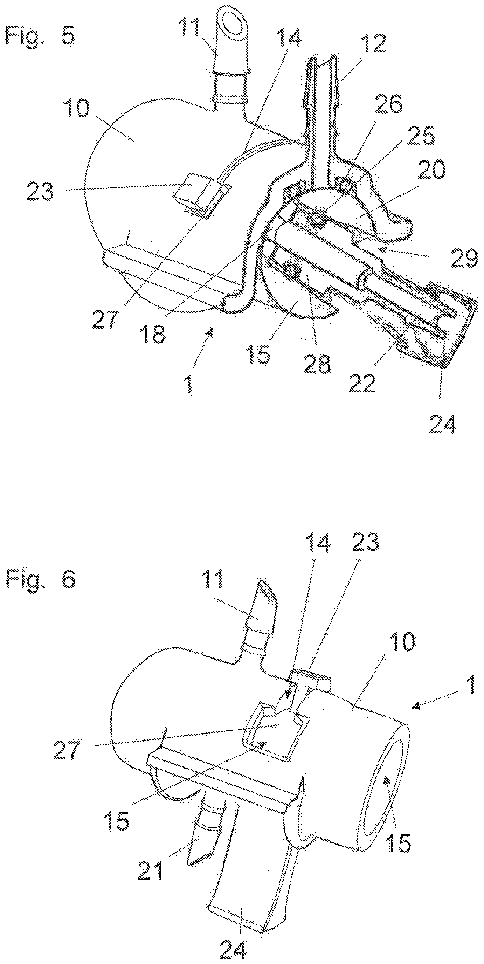

In Fig. 2 und Fig. 3 ist die Kupplungsvorrichtung 1 in Längsschnitten und in Fig. 4 und Fig. 5 in Querschnitten im Detail gezeigt. Die Kupplungsvorrichtung 1 umfasst im Wesentlichen drei Teile, nämlich einen Trägerkörper 10 mit zwei Anschlüssen 11 und 12 für die Leitungen 5 und 7, einen Steckteil 2 mit zwei Anschlüssen 21 und 22 für die Leitungen 4 und 6, und einen dazwischen angeordneten Drehteil 15, der als Absperrhahn der Strömungsverbindungen fungiert.

Der Trägerkörper 10 ist insbesondere unbeweglich angeordnet, sodass die Leitungen 5 und 7, wie oben erwähnt, fest oder flexibel sein können. Sie werden in weiterer Folge als zweite Leitungen bezeichnet und nicht näher definiert. Der Trägerkörper 10 hat einen hohlzylindrischen Innenraum, der einen mittigen, in Bezug auf die Achse 9 des Trägerkörpers 10 etwa über 180° sich erstreckenden Ausschnitt 13 aufweist (gezeigt durch die strichlierte Linie in Fig. 2), sodass beidseitig Lagerbuchsen für die verdrehbare Lagerung des Drehteiles 15 verbleiben.

Der Drehteil 15 weist beidseitig Lagerringe 30 auf und ist mittig mit einem Aufnahmeraum 16 versehen, der innerhalb des Ausschnitts 13 des Trägerkörpers 10 liegt. Dadurch ist der Aufnahmeraum 16 des Drehteiles 15 durch den Ausschnitt 13 zugänglich und zur Aufnahme des Steckteiles 20 geeignet.

Der Trägerkörper 10 weist dem Ausschnitt 13 nebeneinander, gegenüberliegende Anschlüsse 11, 12 auf, die mit den zweiten Leitungen 5, 7 verbunden sind. Zwischen dem Trägerkörper 10 und dem Drehteil 15 ist rund um jeden Anschluss 11, 12 ein O-Ring 26 eingelegt. Im Drehteil 15 sind vom Aufnahmeraum 16 ausgehend eine erste Öffnung 17, eine Durchbrechung 19 und eine zweite Öffnung 18 vorgesehen. In der in Fig. 2 und Fig. 3 gezeigten Stellung des Drehteiles 15 sind die Strömungsverbindung geöffnet, d. h. der Drehteil 15 ist in einer Stellung, in der die Öffnung 17 mit dem Anschluss 11 und die Öffnung 18 mit dem Anschluss 12 fluchtet. Die Durchbrechung 19 als Teil einer Steck-Dreh-Verriegelung zwischen dem Trägerkörper 10 und dem Steckteil 20 liegt innerhalb eines in Umfangrichtung im Trägerkörper 10 verlaufenden Schlitzes 14, worauf weiter unten näher eingegangen wird.

Der Steckteil 20 ist, wie aus Fig. 3 und Fig. 5 näher ersichtlich, in den Aufnahmeraum 16 des Drehteils 15 eingesteckt. Am Steckteil 20 sind nebeneinander zwei Anschlüsse 21, 22 zur Verbindung mit den ersten Leitungen 4 und 6 der Fig. 1 vorgesehen, wobei jeder Anschluss 21, 22 in einer Steckbuchse 28 endet, die mittels eines O-Rings 25 in eine entsprechende, konische Ausnehmung 29 des Aufnahmeraumes 16 dichtend eingesteckt ist. Wie Fig. 3 zeigt, sind in dieser Position die Anschlüsse 11, 21 über die Öffnung 17 und die Anschlüsse 12, 22 über die Öffnung 18 strömungsverbunden. Mittig zwischen den Anschlüssen 21, 22 ist am Steckteil 20 ein Betätigungsgriff 24 vorgesehen, mittels dem der Drehteil 15 verdreht werden kann, um die Strömungsverbindungen zu unterbrechen. Die unterbrochene Position zeigt Fig. 5, die offene Position, wie erwähnt Fig. 3 und Fig. 4. Da der Steckteil 20 in den Drehteil 15 eingesteckt und mit dem Drehteil 15 gemeinsam verdreht wird, sind die ersten Leitungen 4 und 6 flexibel ausgebildet, insbesondere als Schläuche aus einem für den Transport der Substanz geeigneten Material.

Die Kupplungsvorrichtung 1 weist eine Steck-Dreh-Verriegelung zwischen dem Trägerkörper 10 und dem Steckteil 20 auf, zu der auch die Durchbrechung 19 des Drehteils 15 und der Schlitz 14 im Trägerkörper 10 gehören. Am Steckteil 20 ist gegenüber beziehungsweise in Verlängerung des Betätigungsgriffs 24 ein Riegel 23 mit einem verbreiterten Kopf vorgesehen und der Schlitz 14 endet einseitig in einer Erweiterung 27, die zumindest dem verbreiterten Kopf des Riegels 23 entspricht. Die Steck-Dreh-Verriegelung ist in der Art eines Bajonettverschlusses ausgebildet, d. h. der Steckteil 20 wird in der gesperrten Stellung des Drehteils 15 in diesen eingesteckt, wobei der Kopf des Riegels 23 durch die Durchbrechung 19 des Drehteils 15 und die Erweiterung 27 des Schlitzes 14 durchtritt. Nun kann der Steckteil 20 gemeinsam mit dem Drehteil 15 von der Stellung der Fig. 5 in die Position nach Fig. 4 verschwenkt werden, wobei der Riegel 23 in den Schlitz 14 eintritt und den Drehteil 15 am Ende des Schlitzes fixiert. Dies ist die in Fig. 3 und Fig. 4 gezeigte Stellung, in der die Strömungsverbindungen offen sind, aber der Steckteil 20 nicht herausgezogen werden kann. Soll die Kupplungsvorrichtung 1 getrennt werden, ist die Rückschwenkung in die Position nach Fig. 5 notwendig, wobei sich die Strömungsverbindungen schließen. Der Steckteil 20 kann dann herausgezogen werden, da der verbreiterte Kopf des Riegels 23 wieder aus der Erweiterung 27 und der Durchbrechung 19 des Drehteils 15 austreten kann.

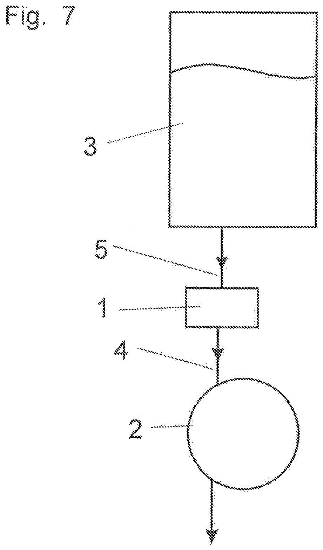

Fig. 6 zeigt eine einfache Ausführung, die nach demselben Prinzip nur eine einzige Strömungsverbindung zwischen einem Anschluss 11 und einem Anschluss 21 herstellt bzw. unterbricht. Es fehlt nur das zweite Anschlusspaar an der anderen Seite der Steck-Dreh-Verriegelung. Fig. 7 zeigt wiederum schematisch eine Quelle bzw. einen Vorrat mit einem Behälter 3 ähnlich Fig. 1, von dem eine Strömungsverbindung zu einer Abgabestelle ausgeht. In der Strömungsverbindung ist eine einfache Kupplungsvorrichtung 1 gemäß Fig. 6 mit einer Steck-Dreh-Verriegelung angeordnet, sodass auch in dieser Ausführung die zweite Leitung 5 von der ersten Leitung 4 gesperrt trennbar ist.

Die Kupplungsvorrichtung 1 ist einhändig betätigbar und es sind in gleicher Weise auch Kupplungsvorrichtungen herstellbar, die symmetrisch oder asymmetrisch zur Steck-Dreh-Verriegelung noch weitere Anschlusspaare aufweisen, beispielsweise 2/1 Anschlusspaare für drei Strömungsverbindungen oder 2/2 Anschlusspaare für vier Strömungsverbindungen.

## Patentansprüche

1. Kupplungsvorrichtung mit integriertem Absperrhahn zur Anordnung in einer Strömungsverbindung zwischen einer ersten Leitung (4) und einer zweiten Leitung (5), mit einem Trägerkörper (10), der einen Anschluss (11) für die zweite Leitung (5) aufweist, mit einem Steckteil (20), der mit einem Anschluss (21) für die erste Leitung (4) versehen ist, und mit einem im Trägerkörper (10) zwischen den Anschlüssen (11, 21) angeordneten zylindrischen Drehteil (15), der einen durch einen Ausschnitt (13) des Trägerkörpers (10) zugänglichen Aufnahmeraum (16) für den Steckteil (20) und eine Öffnung (17) aufweist und mittels des lösbar in den Drehteil (15) eingesteckten Steckteiles (20) gemeinsam mit dem Drehteil (15) im Trägerkörper (10) verdrehbar ist, wobei die beiden Anschlüsse (11, 21) in der verdrehten Endstellung des Drehteiles (15) durch die Öffnung (17) strömungsverbunden sind, und wobei zwischen dem Steckteil (20) und dem Trägerkörper (10) eine Steck-Dreh-Verriegelung gebildet ist, **dadurch gekennzeichnet, dass** der Drehteil (15) eine der Steck-Dreh-Verriegelung zugehörige Durchbrechung (19) aufweist, und die Steck-Dreh-Verriegelung einen Schlitz (14) im Trägerkörper (10) und einen vom Steckteil (20) abstehenden Riegel (23) aufweist, der durch die Durchbrechung (19) im Drehteil (15) den Schlitz (14) des Trägerkörpers (10) hintergreift.

2. Kupplungsvorrichtung nach Anspruch 1, **dadurch gekennzeichnet, dass** der Trägerkörper (10) hohlzylindrisch ist und einen seitlichen Ausschnitt (13) aufweist, dem der Anschluss (11) für die zweite Leitung (5) gegenüber liegt.

3. Kupplungsvorrichtung nach Anspruch 2, **dadurch gekennzeichnet, dass** der Steckteil (20) durch den seitlichen Ausschnitt (13) des Trägerkörpers (10) in den Aufnahmeraum (16) des Drehteils (15) eingesteckt ist.

4. Kupplungsvorrichtung nach Anspruch 1, **dadurch gekennzeichnet, dass** der Schlitz (14) von einer Erweiterung (27) ausgeht, deren lichte Weite zumindest dem Riegel (23) des Steckteiles (20) entspricht.

5. Kupplungsvorrichtung nach Anspruch 4, **dadurch gekennzeichnet, dass** der Steckteil (20) an der dem Riegel (23) gegenüber liegenden Seite einen Betätigungsgriff (24) aufweist.

6. Kupplungsvorrichtung nach einem der Ansprüche 1 bis 5 zur Strömungsverbindung zwischen zwei ersten Leitungen (4, 6) und zwei zweiten Leitungen (5, 7), **dadurch gekennzeichnet, dass** der hohlzylindrische Trägerkörper (10) zwei Anschlüsse (11, 12) für die beiden zweiten Leitungen (5, 7), und der Steckteil (20) zwei Anschlüsse (21, 22) für die beiden ersten Leitungen (4, 6) aufweist, wobei die Steck-Dreh-Verriegelung mittig zwischen den Anschlüssen (11, 12; 21, 22) ausgebildet ist.

7. Einrichtung zur Zufuhr einer fließfähigen Substanz aus einer Quelle oder einem Vorrat zu einer Abgabestelle, mit einer trenn- und sperrbaren Strömungsverbindung zwischen der Quelle oder dem Vorrat und der Abgabestelle, **dadurch gekennzeichnet, dass** in der Strömungsverbindung eine Kupplungsvorrichtung (1) nach einem der Ansprüche 1 bis 5 angeordnet ist.

8. Einrichtung zur Zufuhr einer fließfähigen Substanz aus einer Quelle oder einem Vorrat zu einer Abgabestelle, mit einer trenn- und sperrbaren Strömungsverbindung zwischen der Quelle oder dem Vorrat und der Abgabestelle, **dadurch gekennzeichnet, dass** vor der Abgabestelle eine Pumpe (2) vorgesehen ist, und in der Strömungsverbindung eine Kupplungsvorrichtung (1) nach Anspruch 6 angeordnet ist.

9. Einrichtung nach Anspruch 7 oder 8, **dadurch gekennzeichnet, dass** jede erste Leitung (4, 6) flexibel und insbesondere durch einen Schlauch gebildet ist.

## Claims

1. Coupling device with an integrated stopcock for placement in a flow connection between a first line (4) and a second line (5), having a carrier body (10) which has a connection (11) for the second line (5), a plug part (20) furnished with a connection (21) for the first line (4), and a cylindrical rotary part (15) arranged in the carrier body (10) between the connections (11, 21), which rotary part has a receiving space (16) for the plug part (20) accessible via the cut-out (13) of the carrier body (10) and an opening (17), and which, together with the rotary part (15), may be rotated in the carrier body (10) by means of the plug part (20) detachably inserted into the rotary part (15), wherein the two connections (11, 21) are connected for flow in the rotated end position of the rotary part (15) via the opening (17), and wherein a plug-and-rotate lock is formed between the plug part (20) and the carrier body (10), **characterized in that** the rotary part (15) has a through hole (19) associated with the plug-and-rotate lock, and the plug-and-rotate lock comprises a slot (14) in the carrier body (10) and a bolt (23) that projects from the plug part (20) and engages behind the slot (14) of the carrier body (10) via the through hole (19) in the rotary part (15).

2. The coupling device according to claim 1, **characterized in that** the carrier body (10) is hollow cylindrical in shape and has a lateral cut-out (13) opposite the connection (11) for the second line (5).

3. The coupling device according to claim 2, **characterized in that** the plug part (20) is inserted into the receiving space (16) of the rotary part (15) via the lateral cut-out (13) of the carrier body (10).

4. The coupling device according to claim 1, **characterized in that** the slot (14) starts from an extension (27), the clear width of which corresponds at least to the bolt (23) of the plug part (20).

5. The coupling device according to claim 4, **characterized in that** the plug part (20) has an operating handle (24) on the side opposite the bolt (23).

6. The coupling device according to one of Claims 1 to 5 for flow connection between two first lines (4, 6) and two second lines (5, 7), **characterized in that** the hollow cylindrical carrier body (10) has two connections (11, 12) for the two second lines (5, 7), and the plug part (20) has two connections (21, 22) for the two first lines (4, 6), the plug-and-rotate lock being formed centrally between the connections (11, 12; 21, 22).

7. A device for supplying a flowable substance from a source or a supply to a discharge point, having a flow connection that connects the source or the supply and the discharge point and may be disconnected and shut off, **characterized in that** a coupling device (1) according to one of claims 1 to 5 is arranged in the flow connection.

8. A device for supplying a flowable substance from a source or a supply to a discharge point, having a flow connection that connects the source or the supply and the discharge point and may be disconnected and shut off, **characterized in that** a pump (2) is furnished prior to the discharge point, and a coupling device (1) according to claim 6 is arranged in the flow connection.

9. The device according to claim 7 or 8, **characterized in that** each first line (4, 6) is flexible and in particular formed by a hose.

## Revendications

1. Dispositif de couplage doté d'un robinet d'arrêt intégré pour l'agencement dans une communication d'écoulement entre une première conduite (4) et une deuxième conduite (5), doté d'un corps porteur (10), lequel comporte un raccord (11) pour la deuxième conduite (5), doté d'une pièce d'enfichage (20), laquelle est prévue avec un raccord (21) pour la première conduite (4), et doté d'une pièce tournante cylindrique (15) agencée dans le corps porteur (10) entre les raccords (11, 21), laquelle comporte un espace de logement (16) accessible par une échancrure (13) du corps porteur (10) pour la pièce d'enfichage (20) et une ouverture (17), et peut tourner dans le corps porteur (10) conjointement avec la pièce tournante (15) au moyen de la pièce d'enfichage (20) enfichée de manière amovible dans la pièce tournante (15), dans lequel les deux raccords (11, 21) sont en communication d'écoulement par l'ouverture (17) dans la position finale tournée de la pièce tournante (15), et dans lequel un verrouillage insertion-rotation est formé entre la pièce d'enfichage (20) et le corps porteur (10), **caractérisé en ce que** la pièce tournante (15) comporte une découpe (19) appartenant au verrouillage insertion-rotation, et le verrouillage insertion-rotation comporte une fente (14) dans le corps porteur (10) et un loquet (23) dépassant de la pièce d'enfichage (20), lequel s'engage par l'arrière dans la fente (14) du corps porteur (10) à travers la découpe (19) dans la pièce tournante (15).

2. Dispositif de couplage selon la revendication 1, **caractérisé en ce que** le corps porteur (10) est un cylindre creux et comporte une échancrure latérale (13), laquelle fait face au raccord (11) pour la deuxième conduite (5).

3. Dispositif de couplage selon la revendication 2, **caractérisé en ce que** la pièce d'enfichage (20) est enfichée dans l'espace de logement (16) de la pièce tournante (15) à travers l'échancrure latérale (13) du corps porteur (10).

4. Dispositif de couplage selon la revendication 1, **caractérisé en ce que** la fente (14) émane d'un épaulement (27), dont la lumière correspond au moins au loquet (23) de la pièce d'enfichage (20).

5. Dispositif de couplage selon la revendication 4, **caractérisé en ce que** la pièce d'enfichage (20) comporte une poignée d'actionnement (24) sur le côté opposé au loquet (23).

6. Dispositif de couplage selon l'une des revendications 1 à 5 pour communication d'écoulement entre deux premières conduites (4, 6) et deux deuxièmes conduites (5, 7), **caractérisé en ce que** le corps porteur cylindrique creux (10) comporte deux raccords (11, 12) pour les deux deuxièmes conduites (5, 7) et la pièce d'enfichage (20) comporte deux raccords (21, 22) pour les deux premières conduites (4, 6), dans lequel le verrouillage insertion-rotation est réalisé au milieu entre les raccords (11, 12; 21, 22).

7. Moyen permettant l'apport d'une substance fluide depuis une source ou une réserve à un point de déversement, avec une communication d'écoulement pouvant être séparé et bloqué entre la source ou la réserve et le point de déversement, **caractérisé en ce qu'**un dispositif de couplage (1) selon l'une des revendications 1 à 5 est agencé dans la communication d'écoulement.

8. Moyen permettant l'apport d'une substance fluide depuis une source ou une réserve à un point de déversement, avec une communication d'écoulement pouvant être séparé et bloqué entre la source ou la réserve et le point de déversement, **caractérisé en ce qu'**une pompe (2) est prévue avant le point de déversement et un dispositif de couplage (1) selon la revendication 6 est agencé dans la communication d'écoulement.

9. Moyen selon la revendication 7 ou 8, caractérisé en que chaque première conduite (4, 6) est formée de manière flexible en particulier formée par un tuyau.
